**Europäisches Patentamt**

**European Patent Office**

**Office européen des brevets**

(11) Numéro de publication : **0 225 227 B2**

(12) NOUVEAU FASCICULE DE BREVET EUROPEEN

(45) Date de publication du nouveau fascicule du brevet : **29.07.92 Bulletin 92/31**

(51) Int. Cl.⁵ : **F16F 13/00**

(21) Numéro de dépôt : **86402382.5**

(22) Date de dépôt : **24.10.86**

(54) Perfectionnements aux supports antivibratiores hydrauliques.

(30) Priorité : **28.10.85 FR 8515988**

(43) Date de publication de la demande :
**10.06.87 Bulletin 87/24**

(45) Mention de la délivrance du brevet :
**22.02.89 Bulletin 89/08**

(45) Mention de la décision concernant l'opposition :
**29.07.92 Bulletin 92/31**

(84) Etats contractants désignés :
**BE DE ES GB IT NL SE**

(56) Documents cités :
**EP-A- 0 147 242**
**EP-A- 0 154 268**
**EP-A- 0 165 095**
**EP-A- 0 183 251**
**DE-A- 3 239 787**
**DE-A- 3 245 653**
**FR-A- 2 384 999**
**FR-A- 2 415 241**

(56) Documents cités :
**PATENTS ABSTRACTS OF JAPAN, vol. 9, no. 256 (M-421)[1979], 15 octobre 1985; & JP-A-60 104 824 (HONDA GIKEN KOGYO K.K.)10-06-1985**
**PATENTS ABSTRACTS OF JAPAN, vol. 9, no. 55 (M-362)[1778], 9 mars 1985; & JP-A-59 190 531 (HONDA GIKEN KOGYO K.K.)29-10-1984**
**PATENTS ABSTRACTS OF JAPAN, vol. 8, no. 216 (M-329)[1653], 3 octobre 1984; & JP-A-59 99 132 (TOYODA GOSEI K.K.)07-06-1984**

(73) Titulaire : **HUTCHINSON**
**2 rue Balzac**
**F-75008 Paris (FR)**

(72) Inventeur : **Bellamy, Alain**
**2 impasse de Lubidet**
**F-41100 Vendome (FR)**
Inventeur : **Bodin, François**
**8 rue de la République**
**F-28200 Jallans (FR)**

(74) Mandataire : **Behaghel, Pierre et al**
**CABINET PLASSERAUD 84 rue d'Amsterdam**
**F-75009 Paris (FR)**

EP 0 225 227 B2

## Description

L'invention concerne les dispositifs antivibratoires destinés à être interposés aux fins de support et d'amortissement entre deux éléments rigides individuellement soumis à certaines oscillations et/ou vibrations, l'amortissement faisant intervenir le refoulement d'un liquide à travers un passage étranglé.

A titre d'exemple non limitatif, on indique que de tels supports peuvent être montés entre un châssis de véhicule et le moteur de ce véhicule en vue d'amortir aussi bien les oscillations imposées au châssis par les irrégularités et variations de déclivité du sol lors de la circulation du véhicule sur ce sol que les vibrations dues au fonctionnement du moteur.

L'invention concerne plus particulièrement, parmi les supports du genre en question, ceux qui sont constitués par un boîtier étanche interposé entre les deux éléments rigides, boîtier comportant une embase rigide solidarisable avec l'un des deux éléments rigides, un anneau rigide solidarisable avec l'autre élément rigide, une paroi élastique annulaire de support, de préférence d'allure tronconique, reliant de manière étanche l'embase à l'anneau et une membrane flexible raccordée de manière étanche à l'anneau, l'intérieur de ce boîtier étant divisé, par une cloison rigide raccordée à l'anneau entre la paroi annulaire et la membrane, en deux chambres, savoir une chambre de travail du côté de la paroi annulaire et une chambre de compensation du côté de la membrane, ces deux chambres communiquant entre elles en permanence par le passage étranglé ci-dessus, lequel est avantageusement constitué par un canal incurvé situé dans la zone de raccordement entre la paroi annulaire et l'anneau, et une masse liquide remplissant les deux chambres ainsi que le passage étranglé.

Avec un tel support, les oscillations ou vibrations créées entre les deux éléments rigides ont pour effet de rapprocher et d'écarter axialement à tour de rôle ces deux éléments l'un de l'autre.

Celles, de ces oscillations, dites "de hachis", qui présentent une fréquence relativement basse (par exemple de l'ordre de 15 Hz) et une amplitude relativement élevée (supérieure à 0,5 mm), ont pour effet de refouler le liquide de l'une des deux chambres dans l'autre à travers le passage étranglé et inversement, ce qui assure l'amortissement désiré.

L'invention vise plus particulièrement encore le cas où les supports du genre en question sont agencés en outre de façon à amortir certaines vibrations présentant une fréquence relativement élevée (supérieure à 20 Hz) et une amplitude relativement faible (inférieure à 0,5 mm), comme c'est le cas par exemple des vibrations engendrées par le fonctionnement au ralenti du moteur d'un véhicule à l'arrêt, en particulier lorsqu'il s'agit d'un moteur Diesel.

Dans certains modes de réalisation connus de tels supports, cet amortissement particulier est assuré en délimitant par un panneau mobile ou déformable une portion de la face intérieure de la chambre de travail, portion généralement prévue sur la cloison intermédiaire, et en prévoyant des moyens pour limiter l'amplitude des mouvements ou déformations de ce panneau à une valeur faible, généralement de l'ordre de 0,5 mm.

Le panneau en question est relativement fragile et coûteaux.

Dans une variante permettant de faire l'économie dudit panneau, c'est-à-dire pour laquelle la chambre de travail est exclusivement délimitée extérieurement par la paroi annulaire et par la cloison intermédiaire rigide, on a proposé d'assurer l'amortissement particulier ci-dessus défini en rendant solidaire de l'embase ridige un disque mince immergé dans la chambre de travail au niveau de la zone médiane de la paroi élastique annulaire de support. La périphérie de ce disque est alors directement entourée par une portion, de la face interne de ladite paroi, fortement inclinée sur l'axe de support.

Le volume de liquide contenu dans l'espace annulaire étroit formé entre cette périphérie et cette portion est sans doute soumis à des déplacements propres à amortir certaines des vibrations à haute fréquence imposées au support.

Mais les dimensions de cet espace annulaire sont fortement variables au cours de la mise sous charge, du fonctionnement et de la vie du support, en raison à la fois de la déformabilité de la paroi élastique annulaire et de la forte inclinaison de la portion, de sa face interne, qui entoure le disque.

Or il existe une correspondance directe entre d'une part les dimensions dudit espace annulaire, et plus précisément le rapport R entre sa longueur axiale et sa section transversale, et d'autre part la fréquence F des vibrations susceptibles d'être amorties au maximum par le support concerné, fréquence pour laquelle un phénomène de résonance est créé dans la masse de liquide occupant l'espace annulaire.

L'invention a pour but, surtout, de remédier à l'inconvénient signalé en rendant pratiquement constantes dans le temps les dimensions, ou tout au moins le rapport R longueur/section, de l'espace annularie considéré, ce qui permet de déterminer facilement à l'avance et de manière durable la fréquence F ci-dessus définie correspondant à l'amortissement optimum.

A cet effet les supports du genre en question sont essentiellement caractérisés selon l'invention en ce que la cloison rigide définit au moins en partie une cavité cylindrique ou sensiblement cylindrique fermée du côté de la chambre de compensation et ouverte du côté de la chambre de travail, en ce qu'un élément-plongeur est lié à l'embase rigide et plonge dans ladite cavité, et en ce qu'une surface cylindrique ou sensiblement cylindrique portée par l'élément-plongeur définit avec la surface intérieure de ladite cavité une colonne annulaire, formant un passage étranglé pour le liquide et située entre l'intérieur de la cavité et le reste de la chambre de travail.

Dans des modes de réalisation préférés, on a recours en outre à l'une et/ou à l'autre des dispositions suivantes :

– l'élément-plongeur a la forme d'un doigt présentant une surface latérale cylindrique ou sensiblement cylindrique,

– la colonne annulaire est délimitée intérieurement par le bord d'une semelle transversalement débordante terminant un pied plus étroit, le pied et la semelle formant l'élément-plongeur,

– dans un support selon l'alinéa précédant, la colonne annulaire est délimitée extérieurement au moins en partie par un ressaut d'une rondelle profilée en S traversée avec eu par le pied et non traversable par la semelle,

– l'une au moins des deux faces délimitant la colonne annulaire est légèrement tronconique de façon telle que le rapport entre la longueur axiale et la section transversale de ladite colonne demeure sensiblement constant lorsque la position axiale relative moyenne de ces deux faces varie par suite de la fatigue de la paroi annulaire,

– l'une au moins des deux faces délimitant la colonne annulaire est constituée par un revêtement élastique d'une pièce rigide.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention en se référant aux dessins ci-annexés d'une manière bien entendu non limitative.

La figure 1, de ces dessins, montre en coupe axiale un support hydraulique antivibratoire établi selon l'invention.

La figure 2 est un graphique faisant apparaître certaines caractéristiques dudit support.

La figure 3 montre en coupe axiale une variante d'un tel support également conforme à l'invention.

Dans chaque cas, le support considéré est destiné à être interposé verticalement ou selon une direction légèrement inclinée sur la verticale entre un organe porteur rigide constitué par un châssis de véhicule et un organe supporté rigide constitué par un moteur à combustion interne.

Les termes "haut, bas, supérieur, inférieur, cuvette", utilisés dans la description qui suit, le sont à titre d'exemple non limitatif car le support décrit peut parfaitement être utilisé à l'envers du sens adopté pour cette description.

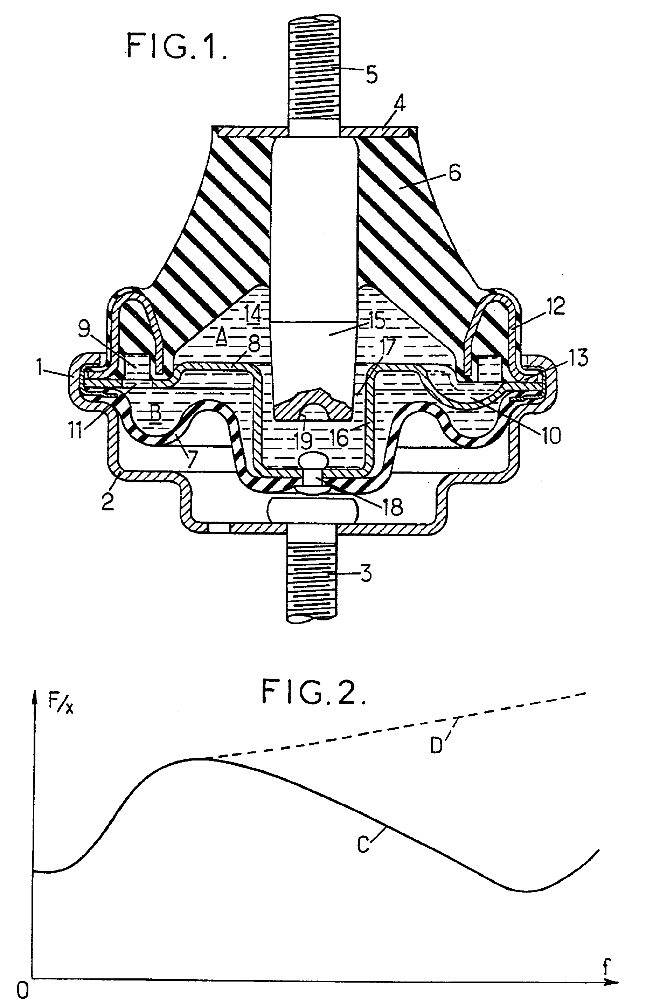

Le support représenté sur la figure 1 se présente sous la forme générale d'un boîtier étanche comportant :

– un anneau rigide 1 constituant le bord d'une cuvette métallique inférieure 2 elle-même susceptible d'être fixée sur le châssis d'un véhicule à l'aide d'un boulon 3 en attente, ce boulon traversant vers le bas le centre de ladite cuvette,

– une plaquette supérieure 4 traversée vers le haut par un boulon 5 en attente servant à la fixation du moteur du véhicule,

– une paroi annulaire élastique 6 suffisamment épaisse pour transmettre les charges du moteur au châssis, paroi délimitée par deux surfaces tronconiques évasées vers le bas et dont la petite base, disposée en haut, est adhérée contre la plaquette 4, sa grande base inférieure étant raccordée de façon étanche à l'anneau 1,

– et une membrane inférieure étanche et flexible 7 contenue à l'intérieur de la cuvette 2, à une petite distance de celle-ci, le bord de cette membrane étant fixé de façon étanche sur l'anneau 1.

Une cloison métallique intermédiaire 8 divise l'intérieur du boîtier ainsi formé en deux chambres, savoir une chambre de travail supérieure A et une chambre de compensation ou d'équilibrage inférieure B.

Le pourtour de la cloison 8 est à cet effet raccordé de façon étanche à l'anneau 1, entre la paroi épaisse 6 et la membrane 7.

Un passage étranglé 9 fait communiquer en permanence les deux chambres A et B entre elles.

Ce passage 9 est ici constitué par un canal incurvé s'étendant selon un arc d'environ 315 degrés, canal délimité supérieurement par une gorge évidée dans la base de la paroi épaisse 6 et inférieurement par une portion annulaire de la cloison intermédiaire 8.

L'une des extrémités du canal 9 est reliée à la chambre A par l'intermédiaire d'un bossage 10 formé dans la portion de cloison 8 en regard et l'autre extrémité du canal 9 est reliée à la chambre B à travers un trou 11 évidé dans la cloison 8.

La base de la paroi épaisse 6 est avantageusement renforcée par une bague métallique 12 noyée dans la masse de cette base et constituée par un anneau de tôle repliée prolongé vers l'extérieur par une collerette radiale 13.

L'assemblage sur l'anneau 1 des bords respectifs de la collerette 13, de la membrane 7 et de la cloison intermédiaire 8 est assuré par superposition de ces trois bords et par leur pincement ou sertissage à l'intérieur de l'anneau 1 refermé sur eux.

Une masse liquide 14 remplit les chambres A et B ainsi que le canal 9.

La tête du boulon 5 est prolongée axialement vers le bas par un doigt rigide 15 faisant corps avec lui dont l'extrémité inférieure pénètre avec un jeu radial J et selon une profondeur axiale L dans un godet cylindrique 16 formé par la portion centrale de la cloison 8.

La portion du doigt 15 qui est enfoncée à l'intérieur du godet 16 délimite avec ce dernier une colonne annulaire 17 d'épaisseur radiale J, de hauteur axiale L et dont le diamètre intérieur D est égal au diamètre extérieur de ladite portion enfoncée.

Cette colonne 17 définit un passage étranglé pour le liquide entre l'intérieur du godet 16 et le reste de la chambre A.

Les cotes de ce passage, et en particulier le rapport entre sa longueur L et sa section droite S, sont déterminées de façon à amortir les vibrations désirées, notamment par mise en résonance de la masse liquide remplissant ledit passage.

Dans des modes de réalisation avantageux, les valeurs respectives des cotes D, L et J sont respectivement de l'ordre de 20 mm, de 5 à 15 mm, et de 0,5 à 3 mm.

On voit encore sur la figure 1 :
– un rivet 18 fixant le centre de la membrane flexible 7 sur le centre du godet 16,
– et un alvéole 19 évidé dans la face terminale inférieure du doigt 15 et propre à coiffer la tête, du rivet 18, qui est intérieure à la chambre A lorsque le support est complètement écrasé.

Pour compenser automatiquement l'affaisement progressif dans le temps de la paroi épaisse 6 au plan du rapport L/S, on donne avantageusement une forme tronconique à l'une au moins des deux surfaces latérales qui délimitent cette colonne, et de préférence à la surface latérale extérieure du doigt 15 : ce rapport demeure ainsi constant quel que soit le degré moyen d'enfoncement du doigt 15 dans le godet 16.

Le graphique représenté sur la figure 2 fait apparaître l'avantage présenté par le support décrit ci-dessus.

Sur ce graphique, on a porté en abscisses la fréquence des vibrations à amortir et en ordonnées la raideur ou rigidité du support.

Cette raideur est exprimée en rapport F/x, F étant la force appliquée verticalement sur le support entre ses boulons 3 et 5 et x, l'amplitude du déplacement vertical alternatif effectué entre ces deux boulons ou, ce qui revient au même, entre le doigt 15 et le godet 16.

Il est à noter que ce déplacement vertical alternatif, effectué au rythme des oscillations ou vibrations à amortir, met en jeu une sorte de pompage effectué entre le doigt 15 formant piston et le godet 16 formant cylindre : lors de ce pompage, le liquide 14 contenu dans le jeu radial annulaire correspondant à la colonne 17 interposée entre le piston et le cylindre subit des sollicitations diverses, en particulier de refoulement et d'entraînement par frottement.

La courbe correspondant au support ci-dessus décrit est celle C représentée en traits pleins sur la figure 2.

A titre de comparaison, on a représenté en traits interrompus la courbe D correspondant au même support dont on aurait supprimé la colonne annulaire 17, par exemple en tronquant le doigt 15.

On voit que, si le support présente dans chacun des deux cas une plage de fréquences relativement basses (inférieures à 15 Hz) pour laquelle la raideur est relativement faible, cette raideur demeure relativement élevée à toutes les autres fréquences pour le support dépourvu de la colonne annulaire alors qu'elle présente au contraire une seconde plage de souplesse ou faible raideur à des fréquences élevées pour le support selon l'invention.

Ces fréquences élevées sont généralement comprises entre 150 et 250 Hz.

La présence dans la chambre de travail de la colonne annulaire 17 ou "seconde colonne" de liquide - le canal 9 pouvant être considéré comme "première colonne" - permet donc à elle seule d'absorber certaines vibrations imposées au support auxdites fréquences relativement élevées, ce qui permet d'améliorer sensiblement le confort de l'habitacle du véhicule au plan du silence et de l'absence de vibrations.

Il est à noter que cet avantage est obtenu d'une manière extrêmement économique et fiable, et en particulier sans faire appel à une cloison déformable ou mobile sujette à vibrations.

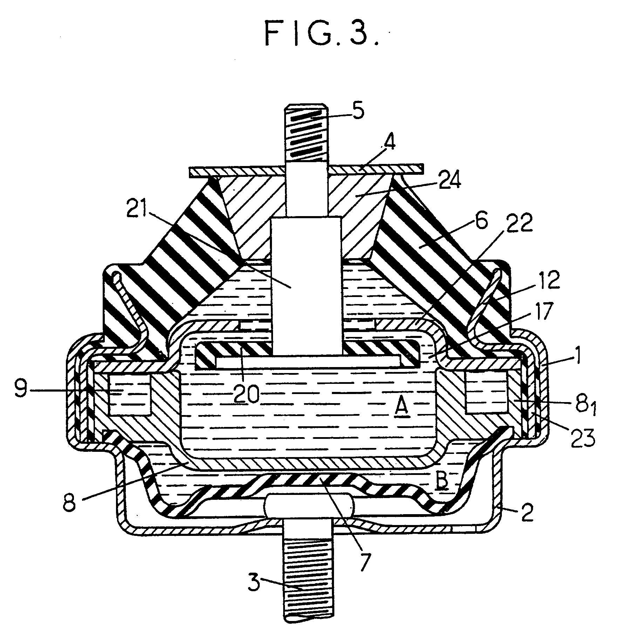

La figure 3 montre une variante dans laquelle les éléments identiques à ceux décrits ci-dessus ont été affectés des mêmes références que précédemment.

Cette variante diffère essentiellement de la précédente en ce que la colonne annulaire de liquide 17 est ici délimitée :
– intérieurement par le bord d'une semelle 20 transversalement débordante terminant un pied plus étroit 21 qui prolonge inférieurement le boulon 5,
– et extérieurement par un ressaut d'une rondelle 22 profilée en S qui entoure avec jeu ledit pied et sa semelle et dont le pourtour est rapporté contre la cloison intermédiaire 8.

Le diamètre intérieur de la rondelle 22 est choisi plus petit que le diamètre extérieur de la semelle 20, ce qui présente l'avantage de conférer au support une sécurité vis-à-vis des arrachements du fait de la butée mutuelle de ces deux éléments.

En outre, la variante de la figure 3 diffère de celle de la figure 1 par les quelques autres points suivants :
– le canal 9 est ici délimité inférieurement par une gorge incurvée évidée dans un bourrelet épais $8_1$ formant la zone périphérique de la cloison 8 et supérieurement par une zone annulaire de la rondelle 22,
– la bague 12 qui arme la base de la paroi 6 est ici prolongée inférieurement par une jupe axiale 23,
– le pied 21 est logé ainsi que le boulon 5 dans un plot métallique 24 alésé en correspondance et recouvert par la plaquette 4.

En suite de quoi, et quel que soit le mode de réalisation adopté, on dispose finalement d'un support hydraulique antivibratoire dont la constitution et le fonctionnement résultent suffisamment de ce qui précède.

Ce support présente de nombreux avantages sur ceux actuellement connus, en particulier en ce qui concerne le faible prix de revient, la robustesse et la possibilité de déterminer très facilement à l'avance et de manière définitive le rapport longueur/section de la colonne étranglée "haute fréquence" et donc la valeur F de la haute fréquence pour laquelle l'amortissement du support est maximum.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment:

    – celles où la colonne annulaire ne serait pas unique, mais remplacée par une pluralité de telles colonnes, identiques ou non,

    – celles où l'un au moins des deux éléments délimitant la colonne annulaire serait lié à l'élément rigide correspondant (embase ou anneau) non pas d'une manière rigide, mais par l'intermédiaire d'un corps élastique de liaison non sollicité à la déformation par les oscillations ou vibrations à amortir,

    – celles où le doigt ci-dessus, délimitant intérieurement la colonne annulaire, serait tubulaire au lieu d'être massif,

    – celles où la colonne annulaire serait délimitée intérieurement par le bord d'une collerette prolongeant radialement vers l'extérieur la base d'une cloche solidaire de l'embase rigide,

    – celles où, la colonne annulaire étant délimitée intérieurement par le bord d'une semelle débordante ou collerette et une rondelle étant prévue pour empêcher les arrachements par butée contre elle de cette semelle ou collerette, ladite colonne serait délimitée extérieurement par une portion rigide autre qu'un ressaut de ladite rondelle,

    – celles où au moins un trou serait évidé dans la cloison intermédiaire rigide, ce trou étant ou bien relativement petit et ouvert en permanence, cas dans lequel il constitue un passage étranglé en parallèle avec le passage 9, ses cotes étant déterminées de façon à assurer l'amoritissement d'oscillations autres que celles prises en charge par ledit passage 9, ou bien relativement large et obturable à volonté par des moyens appropriés, ce qui permet de court-circuiter le passage 9,

    – celles où l'une au moins des deux faces délimitant la colonne annulaire serait constituée au moins en partie par un revêtement élastique rapporté sur une pièce rigide.

**Revendications**

1. Dispositif antivibratoire destiné à être interposé aux fins de support et d'amortissement entre deux éléments rigides, constitué par un boîtier étanche comportant une embase rigide (4) solidarisable avec l'un des deux éléments rigides, un anneau rigide (1) solidarisable avec l'autre élément rigide, une paroi élastique annulaire de support (6) reliant de manière étanche l'embase à l'anneau et une membrane flexible (7) raccordée de manière étanche à l'anneau, l'intérieur de ce boîtier étant divisé, par une cloison rigide (8) raccordée à l'anneau entre la paroi annulaire et la membrane, en deux chambres, à savoir une chambre de travail (A) du côté de la paroi annulaire et une chambre de compensation (B) du côté de la membrane, ces deux chambres communiquant entre elles en permanence par un passage étranglé (9) et une masse liquide (14) remplissant les deux chambres ainsi que le passage étranglé, caractérisé en ce que la cloison rigide (8) définit au moins en partie une cavité cylindrique ou sensiblement cylindrique fermée du côté de la chambre de compensation (B) et ouverte du côté de la chambre de travail (A), en ce qu'un élément-plongeur (15,20,21) est lié à l'embase rigide (4) et plonge dans ladite cavité, et en ce qu'une surface cylindrique ou sensiblement cylindrique portée par l'élément-plongeur (15,20,21) définit avec la surface intérieure de ladite cavité une colonne annulaire (17), formant un passage étranglé pour le liquide et située entre l'intérieur de la cavité et le reste de la chambre de travail (A).

2. Dispositif selon la revendication 1, caractérisé en ce que l'élément-plongeur a la forme d'un doigt (15) présentant une surface latérale cylindrique ou sensiblement cylindrique.

3. Dispositif selon la revendication 2, caractérisé en ce que la colonne annulaire (17) est délimitée extérieurement par un godet (16) formé dans la partie centrale de la cloison intermédiaire (8).

4. Dispositif selon la revendication 1, caractérisé en ce que la colonne annulaire (17) est délimitée intérieurement par une semelle (20) transversalement débordante terminant un pied (21) plus étroit, le pied (21) et la semelle (20) formant l'élément-plongeur.

5. Disposition selon la revendication 4, caractérisé en ce que le pied est creux et se présente sous la forme d'une cloche dont le bord est prolongé radialement par une collerette constituant la semelle débordante.

6. Dispositif selon l'une quelconque des revendications 4 et 5, caractérisé en ce qu'il comprend une rondelle (22) solidaire de l'anneau rigide (1), rondelle traversée avec jeu par le pied, mais non traversable par la semelle débordante.

7. Dispositif selon la revendication 6, caractérisé en ce que la rondelle (22) est profilée en S et en ce que la colonne annulaire (17) est délimitée extérieurement au moins en partie par un ressaut de cette rondelle.

8. Dispositif selon l'une quelconque des précédentes revendications, caractérisé en ce que l'une au moins des faces délimitant la colonne annulaire est constituée au moins en partie par un revêtement élastique d'une pièce rigide.

9. Dispositif selon l'une quelconque des revendications précédentes, caractérisé en ce que l'une au moins des deux faces délimitant la colonne annulaire (17) est légèrement tronconique de façon telle que le rapport entre la longueur axiale et la section transversale de ladite colonne demeure sensiblement constant lorsque la position axiale relative moyenne de ces deux faces varie par suite de la fatigue de la paroi annulaire (6).

**Patentansprüche**

1. Hydraulisches Antischwingungslager, das zur Abstützung und Dämpfung zwischen zwei starren Elementen eingefügt ist und aus folgenden Teilen besteht: einem dichten Gehäuse mit einem starren Ansatz (4), der an einem der beiden starren Elemente anbringbar ist, einem starren Ring (1), der an dem anderen starren Element anbringbar ist, einer elastischen ringförmigen Stützwandung (6), die den Ansatz dicht mit dem Ring verbindet, und einer biegsamen Membran (7), die dicht mit dem Ring verbunden ist, wobei der Innenraum des Gehäuses durch eine starre Trennwand (8), die zwischen der ringförmigen Wandung und der Membran mit dem Ring verbunden ist, in zwei Kammern unterteilt wird, nämlich eine Arbeitskammer (A) auf der Seite der ringförmigen Wandung und eine Kompensationskammer (B) auf der Seite der Membran, die beiden Kammern untereinander dauernd über eine enge Durchgangsöffnung (9) verbunden sind, und die beiden Kammern und die enge Durchgangsöffnung mit einem flüssigen Medium (14) ausgefüllt sind, dadurch gekennzeichnet, daß die starre Trennwand (8) wenigstens teilweise einen zylindrischen oder annähernd zylindrischen Hohlraum begrenzt, der auf der Seite der Kompensationskammer (B) geschlossen und auf der Seite der Arbeitskammer (A) offen ist, daß ein Tauchkörper (15, 20, 21) mit dem starren Ansatz (4) verbunden ist und in den Hohlraum eintaucht und daß eine zylindrische oder im wesentlichen zylindrische Oberfläche des Tauchkörpers (15, 20, 21) mit der inneren Oberfläche des Hohlraumes eine ringförmige Säule (17) begrenzt, die eine enge Durchgangsöffnung für die Flüssigkeit bildet und zwischen dem Innenraum des Hohlraumes und dem Rest der Arbeitskammer (A) liegt.

2. Hydraulisches Antischwingungslager nach Anspruch 1, dadurch gekennzeichnet, daß der Tauchkörper die Form eines Zapfens (15) mit einer zylindrischen oder annähernd zylindrischen Mantelfläche hat.

3. Hydraulisches Antischwingungslager nach Anspruch 2, dadurch gekennzeichnet, daß die ringförmige Säule (17) nach außen zu durch eine napfartige Ausbuchtung (16) des mittleren Abschnittes der Trennwand (8) begrenzt wird.

4. Hydraulisches Antischwingungslager nach Anspruch 1, dadurch gekennzeichnet, daß die ringförmige Säule (17) nach innen zu durch eine in Querrichtung überstehende Platte (20) gebildet wird, die am Ende eines schmaleren Fußstückes (21) angebracht ist, wobei das Fußstück (21) und die Platte (20) den Tauchkörper bilden.

5. Hydraulisches Antischwingungslager nach Anspruch 4, dadurch gekennzeichnet, daß das Fußstück hohl ist und die Form einer Glocke hat, deren Rand in radialer Richtung durch einen Kragen verlängert ist, der die überstehende Platte bildet.

6. Hydraulisches Antischwingungslager nach einem der Ansprüche 4 und 5, dadurch gekennzeichnet, daß es eine Ringscheibe (22) enthält, die mit dem starren Ring (1) verbunden ist und sich mit Spiel um das Fußstück erstreckt, ohne daß die Platte durch die Scheibe hindurchtreten kann.

7. Hydraulisches Antischwingungslager nach Anspruch 6, dadurch gekennzeichnet, daß die Ringscheibe (22) ein S-förmiges Profil hat und daß die ringförmige Säule (17) nach außen zu wenigstens teilweise durch einen vorspringenden Absatz der Ringscheibe begrenzt wird.

8. Hydraulisches Antischwingungslager nach einem der vorhergehenden Ansprüche, dadurch gekennzeichnet, daß wenigstens eine der Oberflächen, die die ringförmige Säule begrenzen, aus einem starren Werkstück besteht, das wenigstens teilweise mit einer elastischen Beschichtung versehen ist.

9. Hydraulisches Antischwingungslager nach einem der vorhergehenden Ansprüche, dadurch gekennzeichnet, daß wenigstens eine der beiden Oberflächen, die die ringförmige Säule (17) begrenzen, leicht konisch ausgebildet ist, derart, daß das Verhältnis zwischen der axialen Länge und dem Querschnitt der Säule im wesentlichen konstant bleibt, wenn die relative mittlere axiale Stellung der beiden Oberflächen sich infolge der Ermüdung der ringförmigen Wandung (6) ändert.

**Claims**

1. Anti-vibration device designed to be interposed for support and damping purposes between two rigid elements, constituted by a fluid-tight box comprising a rigid base (4) which can be made fast to one of the two rigid elements, a rigid ring (1) which can be made fast to the other rigid element, an annular elastic support wall (6) connecting the base to the ring in fluid-tight manner, and a flexible diaphragm (7) attached in fluid-tight manner to the ring, the inside of this box being divided, by a rigid partition (8) attached to the ring between the annular wall and the diaphragm, into two chambers, namely a working chamber (A) on the side of the annular wall and a compensating chamber (B) on the side of the diaphragm, these two chambers communicating with one another permanently through a throttled passage (9), and a liquid mass (14) filling the two chambers as well as the throttled passage, characterized in that the rigid partition (8) defines at least in part a cylindrical or substantially cylindrical cavity closed on the side of the compensation chamber (B) and open on the side of the working chamber (A), in that a plunger element (15, 20, 21) is connected to the rigid base (4) and dips into the said cavity, and in that a cylindrical or substantially cylindrical surface of the plunger element (15, 20, 21) defines with the interior surface of said cavity an annular column (17), forming a throttled passage for the liquid and located between the interior of the cavity and the remainder of the working chamber (A).

2. Device according to claim 1, characterized in that the plunger element has the shape of a finger (15) with a cylindrical or substantially cylindrical lateral surface.

3. Device according to claim 2, characterized in that the annular column (17) is bounded externally by a cup (16) formed in the central portion of the intermediate partition (8).

4. Device according to claim 1, characterized in that the annular column (17) is bounded on the inside by a laterally projecting flange (20) at the end of a narrower stem (21), the stem (21) and the flange (20) forming the plunger element.

5. Device according to claim 4, characterized in that the stem is hollow and has the shape of a bell whose rim is extended radially by a collar forming the projecting flange.

6. Device according to claim 4 or 5, characterized in that it comprises a washer (22) fixed to the rigid ring (1), the stem passing through the washer with play but the projecting flange not being able to pass through the washer.

7. Device according to claim 6, characterized in that the washer (22) is shaped like an S and in that the annular column (17) is bounded on the outside at least in part by a step in the washer.

8. Device according to any of the preceding claims, characterized in that at least one of the faces bounding the annular column is formed at least in part by an elastic coating on a rigid part.

9. Device according to any of the preceding claims, characterized in that at least one of the two faces bounding the annular column (17) is slightly tapered so that the ratio of the axial length and the transverse cross-section of said column remains substantially constant when the mean axial relative position of these two faces changes as a result of fatigue in the annular wall (6).

FIG.1.

FIG.2.

# F I G. 3.